Europäisches Patentamt

European Patent Office

Office européen des brevets

(11) Veröffentlichungsnummer: **0 518 106 B1**

(12) **EUROPÄISCHE PATENTSCHRIFT**

(45) Veröffentlichungstag der Patentschrift: **02.08.95**

(51) Int. Cl.[6]: **C01F 7/44**

(21) Anmeldenummer: **92108740.9**

(22) Anmeldetag: **23.05.92**

(54) **Teilkristalline Übergangsaluminiumoxide, Verfahren zu deren Herstellung und Verwendung zur Gewinnung von Formkörpern, die im wesentlichen aus Gamma-A1203 bestehen.**

(30) Priorität: **06.06.91 DE 4118564**

(43) Veröffentlichungstag der Anmeldung:
**16.12.92 Patentblatt 92/51**

(45) Bekanntmachung des Hinweises auf die
Patenterteilung:
**02.08.95 Patentblatt 95/31**

(84) Benannte Vertragsstaaten:
**AT BE CH DE DK ES FR GB GR IT LI LU MC NL PT SE**

(56) Entgegenhaltungen:
**EP-A- 0 015 196**
**EP-A- 0 278 469**
**DD-A- 248 108**
**DE-A- 2 059 946**
**FR-A- 2 432 479**

(73) Patentinhaber: **VAW Aluminium AG**
**Georg-von-Boeselager-Strasse 25**
**D-53117 Bonn (DE)**

Patentinhaber: **LEUNA-WERKE AG**
**Am Haupttor**
**D-06236 Leuna (DE)**

(72) Erfinder: **Thome, Roland, Dr.**
**Brüsseler Strasse 58**
**W-5300 Bonn 1 (DE)**
Erfinder: **Schmidt, Hubertus, Dr.**
**Hauptstrasse 75**
**W-5208 Eitorf (DE)**
Erfinder: **Feige, Reinhard**
**Marienstrasse 25**
**W-5300 Bonn 3 (DE)**
Erfinder: **Bollmann, Ulrich, Dr.**
**Freyburger Strasse 9**
**W-4070 Halle (DE)**
Erfinder: **Lange, Rüdiger, Dr.**
**Hauptstrasse 28**
**W-4201 Leiha (DE)**
Erfinder: **Engels, Siegfried, Prof.**
**Block 461/8**
**W-4090 Halle-Neustadt (DE)**

(74) Vertreter: **Müller-Wolff, Thomas**
**HARWARDT NEUMANN,**
**Patent- und Rechtsanwälte,**
**Postfach 14 55**
**D-53704 Siegburg (DE)**

**Beschreibung**

Die Erfindung betrifft teilkristalline Übergangsaluminiumoxide hoher Festkörperreaktivität, ihre Herstellung durch Schockcalcination von Hydrargillit, sowie ihre Verwendung zur Gewinnung von Formkörpern, die im wesentlichen aus gamma-$Al_2O_3$ bestehen.

Es sind zahlreiche Verfahren zur Herstellung von teilkristallinen $Al_2O_3$-Festkörperpartikeln bekannt, die auf unterschiedlichen Gebieten Verwendung finden.

So ist es z. B. aus WEINLAND und STARK: Chem. Ber. 59(1926), S. 478 sowie aus PETZOLD und ULBRICHT: Tonerde und Tonerdewerkstoffe, Deutscher Verlag für Grundstoffindustrie, Leipzig 1983, S. 24 bekannt, durch Langzeitcalcination von organischen Aluminiumverbindungen oder Aluminiumsalzen unterschiedlicher Zusammensetzung bei Normaldruck und Temperaturen von mehr als 350 °C zu teilkristallinen und/oder röntgenamorphen Aluminiumoxiden zu gelangen, die sich durch eine große spezifische Oberfläche und hohe Reaktivität auszeichnen können.

Derartige Herstellungsmethoden sind aufgrund der geringen Verfügbarkeit der Ausgangsstoffe und infolge unterschiedlicher technologischer Aufwendungen für die großtechnische Nutzung zur Gewinnung von gamma-$Al_2O_3$ Formkörpern wenig relevant. Ferner enthalten die Langzeitcalcinationsprodukte aus Aluminiumsalzen noch Fremdionen im oxidischen Festkörper, die für verschiedene Anwendungsfälle, z. B. beim Einsatz derartiger Materialien für die Gewinnung von Katalysatorkomponenten, sich sehr nachteilig auf deren Aktivität, Selektivität und damit insgesamt auf deren Lebensdauer auswirken.

Weiterhin wurden auch verschiedene Verfahren zur schockartigen Entwässerung von hydroxidischen Ausgangsstoffen beschrieben, insbesondere von $\alpha$-$Al(OH)_3$-Partikeln, die ebenfalls zu $Al_2O_3$-Übergangsformen geringer Kristallinität, hoher Festkörperreaktivität und spezifischer Oberfläche führen (siehe z. B. DE-PS 2 059 946, 2 826 095, DD-PS 250 521).

Die mit den bekannten Verfahren erhaltenen Zersetzungsprodukte enthalten jedoch noch kristalline Anteile des unzersetzten Aluminiumtrihydroxids, insbesondere von Hydrargillit, und/oder Anteile hydrothermal entstandenen Böhmits, so daß die erforderliche Festkörperreaktivität nicht immer erreicht wird.

Demzufolge resultiert im Rehydratationsprozeß nur ein geringer Umwandlungsgrad der $Al_2O_3$-Partikel in Böhmit feinfaseriger Morphologie, die jedoch für die Weiterverarbeitung, insbesondere für die Stufe der Peptisation und Formgebung der böhmitischen Aluminiumhydroxide, von entscheidender Bedeutung ist. Daher bestehen die auf bekannten Wegen hergestellten $Al_2O_3$-Formkörper (basierend auf der Schockcalcination von Aluminiumtrihydroxidpartikeln, insbesondere von Hydrargillit) in Abhängigkeit von den Bedingungen in den einzelnen technologischen Stufen des Herstellungsprozesses meist aus $Al_2O_3$-Gemischen und besitzen daher für bestimmte Anwendungsfälle, insbesondere bei deren Einsatz als Katalysatorkomponenten, ein ungenügend entwickeltes Porengefüge sowie eine unzureichende mechanische Festigkeit.

Ferner ist bekannt, daß durch eine intensive mechanische Behandlung der Festkörperpartikel vor und/oder nach der Schockcalcination der $Al(OH)_3$-Partikel teilkristalline Übergangsaluminiumoxide bzw. deren Gemische (z. B. DE-OS 1 028 106, 3 128 833, DD-PS 274 980, JP-PS 80/121 914 und 82/147 437) mit hohen röntgenamorphen Festkörperanteilen zugänglich sind, die keine kristallinen hydroxidischen Anteile unzersetzten Hydrargillits und/ oder hydrothermal gebildeten Böhmits enthalten. Deren anschließende in bekannter Weise durchgeführte Rehydratation sowohl bei Normaldruck (z. B. DE-OS 2 826 095, 2 726 126 und JP-PS 78/144 900) als auch unter hydrothermalen Bedingungen (z. B. EP 0 055 164, 0 073 703 und JP-PS 78/144 900) führt insbesondere in Abhängigkeit von der Verweilzeit und der Temperatur der Suspension zu böhmitreichen Aluminiumhydroxiden, die z. T. nicht unbeträchtliche Anteile an Bayerit aufweisen.

Derartige Verfahrensweisen sind aus technologischer Sicht apparativ aufwendiger (z. B. infolge der in diesen Fällen erforderlichen Kombination der Schockcalcination der Hydrargillitpartikel mit einer mechanischen Vor- und/oder Nachbehandlung der Festkörperteilchen) und führen unter Nutzung hydrothermaler Rehydratationsbedingungen zu Anteilen gut kristalliner Festkörperteilchen böhmitischer Natur, die für eine entsprechende Weiterverarbeitung insbesondere in der Stufe der Peptisation mit anorganischen bzw. organischen Säuren, und damit für die Gewinnung hochporöser, fester $Al_2O_3$-Formkörper von Nachteil sind.

Weiterhin ist aus den Patentschriften DE-AS 1 200 271, DE-OS 2 633 599, 3 128 833, JP-PS 80/25 131 und 80/85 458 eine Technologie zur Herstellung von $Al_2O_3$-Formkörpern auf der Basis ungemahlener bzw. mechanisch voraktivierter, schockcalcinierter Aluminiumtrihydroxide, insbesondere Hydrargillit, bekannt, die vor allem dadurch charakterisiert ist, daß eine Formgebung der z. T. auch mechanisch nachbehandelten (JP-PS 78/144 900) teilkristallinen bzw. röntgenamorphen Festkörperpartikeln bereits vor deren Rehydratation erfolgt.

Eine derartige Verfahrensweise wirkt sich infolge hydrothermaler Arbeitsweise während des Rehydratationsprozesses nachteilig auf eine gezielte Entwicklung der Poren im Mikroporenbereich aus, d. h.

insbesondere auf den Anteil der Poren mit einem Radius von $r_p < 10$ nm.

Es bestand daher die Aufgabe, teilkristalline Übergangsaluminiumoxide mit einheitlicher Phasenzusammensetzung und hoher Festkörperreaktivität herzustellen, die im Prozeß der Rehydratation bereits bei Normaldruck einen hohen Umwandlungsgrad der Festkörperpartikel in einen feinfaserigen Böhmit gestatten, um eine günstige Weiterverarbeitung zu Formkörpern, die im wesentlichen gamma-$Al_2O_3$ enthalten, mit gut entwickelter innerer Oberfläche und hoher mechanischer Festigkeit zu gewährleisten.

Die auf diesem Wege hergestellten $Al_2O_3$-Formkörper sollen sich insbesondere für den Einsatz als Adsorbentien, Gasreinigungsmassen, Katalysatorkomponenten bzw. -trägern eignen.

Diese Aufgabe wird erfindungsgemäß durch die in den Patentansprüchen 1 und 9 angegebenen Merkmale gelöst. Es werden ohne eine Mahlaktivierung sowohl durch den Einsatz von Hydrargillitteilchen mit besonderen Festkörpereigenschaften, insbesondere ihrer Kornform und -größe, als auch durch eine geeignete Wahl der Schockcalcinationsbedingungen hochreaktive Festkörperpartikel aus teilkristallinen Übergangsaluminiumoxiden erzeugt.

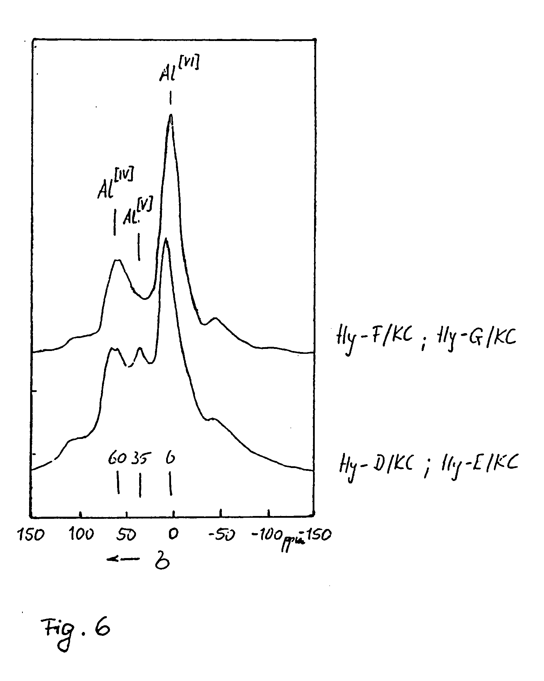

Es hat sich gezeigt, daß diese Übergangsaluminiumoxide mit einem Gehalt an 5-fach koordiniertem Aluminium von mindestens 50 % des Gehalts an 4-fach koordiniertem Aluminium im Vergleich zu den bisher beschriebenen Übergangsaluminiumoxiden (vgl. Fig. 6) besondere Eigenschaften hinsichtlich der Primär- und Sekundärstruktur sowie der Festkörperreaktivität aufweisen. Die erfindungsgemäßen Übergangsaluminiumoxide lassen sich gemäß Anspruch 2 durch einen fehlenden Beugungsreflex im Bereich der angegebenen Netzebenenabstände (vgl. Fig. 5) identifizieren.

Überraschenderweise wurde festgestellt, daß die hohe Lösbarkeit (L) der erfindungsgemäßen Übergangsaluminiumoxide unter den im Anspruch 3 genannten Bedingungen eintritt, obwohl die eingesetzten Hydrargillitpartikel eine sehr unterschiedliche morphologische Struktur aufweisen können.

Die unter den Bedingungen des Anspruchs 4 erzielbare Rehydratationsreaktivität führt zu einem besonders hohen Böhmitanteil von mindestens 70 Ma.-%. Dies ist eine entscheidene Voraussetzung für die Weiterbehandlung des als Zwischenprodukt erhaltenen Übergangsaluminiumoxids.

Überraschenderweise wurde ferner festgestellt, daß die Lösbarkeit (L) des Zwischenproduktes nur in sehr geringem Maße von seiner spezifischen Oberfläche abhängig ist. Dies bedeutet, daß unter den in den Ansprüchen 5, 6, 7 und 8 angegebenen Bedingungen Zwischenprodukte mit verschiedener Oberfläche erhalten werden, die dennoch ein gleichmäßiges Reydratationsverhalten zeigen.

Das erfindungsgemäße Verfahren nach Anspruch 9 zur Herstellung von Formkörpern, die im wesentlichen aus gamma-$Al_2O_3$ bestehen, umfaßt das Schockcalcinieren von feinkristallinen Hydrargillitpartikeln mit einheitlicher morphologischer Struktur (in Form von pseudohexagonalen Plättchen, Nadeln oder mit polyederartiger äußerer Gestalt) im Temperaturbereich von 350 °C bis 750 °C bei mittleren Verweilzeiten der Partikel in der Reaktionszone von 0,01 bis 10 s.

Die einheitliche morphologische Struktur stellt eine entscheidende Voraussetzung für eine günstige Wärmeübertragung und Stoffumwandlung der Festkörperpartikel während deren Schockcalcination dar.

Die schockartige thermische Zersetzung der Hydrargillitpartikel erfolgt in einem Temperaturbereich von 350 °C bis 750 °C bei einer mittleren Verweilzeit von 0,01 bis 10 s.

Besonders geeignet sind Hydrargillitpartikel in Form von

a) pseudohexagonalen Plättchen mit Formfaktoren > 5, einem Durchmesser von 0,1 bis 50 $\mu$m und einer Dicke von 0,1 bis 5 $\mu$m, die bei Temperaturen von 350 °C bis 550 °C mit mittleren Verweilzeiten von 0,05 bis 1,0 s behandelt werden (Anspruch 10);

b) pseudohexagonalen Nadeln mit Formfaktoren > 5, einer Länge von 0,1 bis 50 $\mu$m mit einem Durchmesser von 0,1 bis 5 $\mu$m, die bei Temperaturen von 370 °C bis 600 °C und mittleren Verweilzeiten von 0,1 bis 1,5 s behandelt werden (Anspruch 11);

c) polyederartigen Teilchen mit einem Formfaktor < 5 sowie einem Partikeldurchmesser als $D^{50}$-Wert zwischen 0,5 und 5 $\mu$m, die bei Temperaturen von 400 °C bis 630 °C und mittleren Verweilzeiten von 0,5 bis 5 s behandelt werden (Anspruch 12).

Die auf diesem Wege erhaltenen teilkristallinen Übergangsaluminiumoxide weisen infolge ihrer hohen strukturellen Fehlordnung, die z. B. in einem besonders hohen Gehalt an 5-fach koordiniertem Aluminium zum Ausdruck kommt, eine sehr hohe Festkörperreaktivität auf, die für eine weitgehende Rehydratation derartiger Festkörper in feinfaserigen Böhmit unter den folgenden Bedingungen notwendig ist.

Die aus teilkristallinen Übergangsaluminiumoxiden bestehenden Schockcalcinationsprodukte werden in wäßriger Suspension (vorzugsweise bei einem Massenverhältnis von Festkörper zu Flüssigkeit von 1:3 bis 1:10 sowohl im diskontinuierlichen als auch kontinuierlichen Regime bei Temperaturen von 50 °C bis 95 °C und einem pH-Wert von 5,5 bis 10,5 im Zeitraum von 45 bis 120 min) rehydratisiert. Die böhmitreichen Rehydratationsprodukte weisen eine ausgeprägte feinfaserige Morphologie auf, die einerseits für das Einstellen der Viskosität der Mischungen dieser Materialien mit den entsprechenden anorganischen/organischen Säuren während der Peptisation und andererseits für eine gezielte Steuerung der texturellen (Porengefüge) und mechanischen Eigenschaften (Festigkeit) der auf diesem Wege erhaltenen Formkörper, die im wesentlichen aus gamma-$Al_2O_3$ bestehen, verantwortlich ist.

Auf der Grundlage der beschriebenen hydrargillitischen Rohstoffe und Verfahrensschritte ist es möglich, nach erfolgtem Rehydratisieren und Auswaschen böhmitreiche Produkte mit einem $Na_2O$-Gehalt von < 0,03 Ma. % (bez. auf $Al_2O_3$) zu erzielen (Anspruch 14).

Diese alkaliarmen böhmitreichen Reydratationsprodukte werden anschließend entweder als Filterkuchen (feucht) oder in Form von getrockneten und deagglomorierten (z. B. in einer Stiftmühle) Festkörperteilchen mit Peptisationsmitteln oder Binde- bzw. Gleitmitteln vermischt und zu Formkörpern weiterverarbeitet (Anspruch 15).

Als Formgebungsverfahren kommen in Frage: Extrudieren, Granulieren, Vertropfen und Pelletieren.

In Abhängigkeit von dem jeweiligen Formgebungsverfahren muß das Vermischen des böhmitreichen Rehydratationsproduktes in unterschiedlicher Weise erfolgen.

So wird im Falle des Extrudierens das Rehydratationsprodukt mit einer Säure bei einem Molverhältnis Säure/$Al_2O_3$ zwischen 0,005 und 0,05 bei 25 °C innerhalb von 15 bis 90 min vermischt und peptisiert (Anspruch 16).

Im Falle der Formgebung durch Granulieren oder Vertropfen wird eine intensivere Peptisation bei einem Molverhältnis Säure/$Al_2O_3$ zwischen 0,02 und 0,2 bei 25 °C innerhalb von 30 bis 120 min durchgeführt (Anspruch 17).

Beim Einsatz von ungetrockneten böhmitreichen Rehydratationsprodukten (feuchter Filterkuchen) ist ein Molverhältnis Säure/$Al_2O_3$ im Bereich von 0,02 bis 0,2 bei gleichbleibender Peptisationsdauer einzustellen.

Nach entsprechender Formgebung und thermischer Nachbehandlung erhält man Formkörper, die im wesentlichen aus gamma-$Al_2O_3$ beziehen, wobei die Maxima der Porenradienverteilung in Richtung auf größere Porenradien hin verschoben sind. Dies ist auch ein Grund dafür, daß derartige $Al_2O_3$-Formlinge im Hinblick auf die Gewinnung von Katalysatorkomponenten und -trägern eine breitere Anwendung finden.

Im Falle des Pelletierens von getrockneten und deagglomerierten Rehydratationsprodukten sind diese mit einem Gleit- bzw. Bindemittel (z. B. Graphit) zu vermischen (Anspruch 18).

Die thermische Nachbehandlung der auf unterschiedlichen Wegen hergestellten Formlinge erfolgt im Temperaturbereich von 450 °C bis 650 °C innerhalb von 4 bis 8 h, wobei die auf den beschriebenen Wegen hergestellten Extrudate und Tropfkugeln vorher 12 bis 24 h bei Temperaturen von 100 °C bis 150 °C getrocknet werden müssen.

Die erfindungsgemäßen Formkörper, die im wesentlichen aus gamma-$Al_2O_3$ bestehen, besitzen eine hohe innere Oberfläche sowie eine große mechanische Festigkeit. Diese eignen sich insbesondere für die Herstellung von Adsorbentien, Gasreinigungsmassen, Katalysatorkomponenten und -trägern sowie zur Herstellung von keramischen Materialien, Poliermitteln und Schleifkörnungen.

Nachfolgend wird die Erfindung anhand von Ausführungsbeispielen näher erläutert. Die zugehörigen Figuren zeigen:

Fig. 1: Rasterelektronenmikroskop(REM)-Aufnahme des Ausgangshydrargillits "Hy-C" gemäß Tabelle 1 ("Hy-D" und "Hy-E" weisen eine analoge polyederartige Morphologie auf)

Fig. 2: REM-Aufnahme des Ausgangshydrargillits "Hy-F" gemäß Tabelle 1 ("Hy-G" weist eine analoge Morphologie auf)

Fig. 3: REM-Aufnahme des plättchenförmigen Ausgangshydrargillits "Hy-A"

Fig. 4: REM-Aufnahme des nadel-/prismenförmigen Ausgangshydrargillits "Hy-B"

Fig. 5: Röntgendiffraktogramme der Schockcalcinationsprodukte (erfindungsgemäße Bespiele: "Hy-D/KC" u. "Hy-E/KC", wobei "Hy-A/KC", "Hy-B/KC" und "Hy-C/KC" analoge Röntgendiffrakto-gramme aufweisen. Vergleichsbeispiele: "Hy-F/KC" bzw. "Hy-G/KC")

Fig. 6: $^{27}$Al-MAS-NMR-Spektren der Schockcalcinationsprodukte(erfindungsgemäße Beispiele: "Hy-D/KC" bzw. "Hy-E/KC", wobei "Hy-A/KC", "Hy-B/KC" und "Hy/C/KC" analoge Spektren aufweisen. Vergleichsbeispiele: "Hy-F/KC" bzw. "Hy-G/KC")

**Beispiel 1** (Vergleichsbeispiel, nicht erfindungsgemäß)

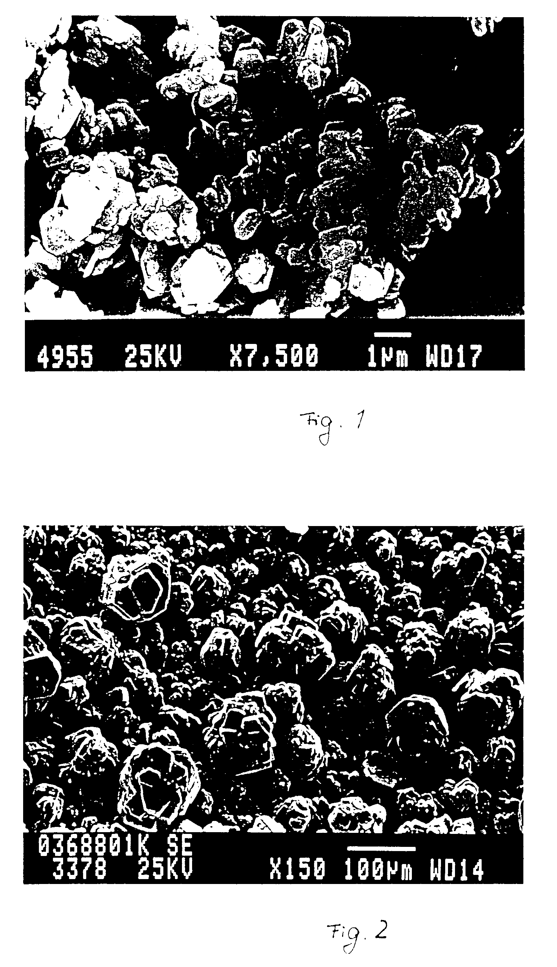

Ein mittels einer Rohrschwingmühle mechanisch vorbehandelter Hydrargillit (Hy) mit einem Korngrößenanteil von ca. 50 % in einem Bereich von 20 bis 60 $\mu$m ("Hy-F") und 2,5 bis 18,5 $\mu$m ("Hy-G"), einem Glührückstand bei 1100 °C von 65,1 Ma.-%, einer spezifischen Oberfläche von weniger als 2 $m^2/g$ und einer Lösbarkeit von Partikeln in NaOH (innerhalb von 30 min bei 60 °C mittels einer 5N NaOH ermittelt) von 25,4 Ma.-% Feststoff bezogen auf $Al_2O_3$ sowie von morphologisch heterogener Natur (gemäß Probe "Hy-F" und "Hy-G" in Tabelle 1 und Fig. 2) wird in einem Reaktionsraum bei Temperaturen von 500 °C mit einem Delta T von 40 K und mittleren Verweilzeiten der Partikel in der Reaktionszone von 0,5 s kurzzeitig thermisch zersetzt, wobei ein teilkristallines Calcinationsprodukt mit heterogener Phasenzusammensetzung, einer spezifischen Oberfläche > 250 $m^2$/g und entsprechender Reaktivität entsteht (gemäß Tabelle 2 und Fig. 5, Probe "Hy-F/KC" und "Hy-G/KC").

Die hauptsächlich aus einem teilkristallinen chi-/gamma-$Al_2O_3$-Gemisch bestehenden Schockcalcinationsprodukte werden im Massenverhältnis Festkörper/Flüssigkeit von 1 : 4,5 bei einer Temperatur von 90 °C im Zeitraum von 80 min bei einem pH-Wert von 8 rehydratisiert. Das Rehydratationsprodukt wird anschließend filtriert, gewaschen, 12 h bei 120 °C getrocknet und mittels einer Stiftmühle deagglomeriert.

Der zu 30 Ma.-% feinfaserigen Böhmit enthaltende Festkörper weist einen $Na_2O$-Restgehalt von 0,04 Ma.-% (bezogen auf $Al_2O_3$) auf und wird in bekannter Weise zu unterschiedlichen Formkörpern weiterverarbeitet: Pillen (5 x 5 mm), Kugeln (1,5 - 6 mm Durchmesser) und Extrudaten (Stränge von 1,2 mm bis 6,0 mm Durchmesser).

Einige charakteristische Eigenschaften ausgewählter $Al_2O_3$-Formkörper, die nach 12-stündiger Calcination bei 500 °C erhalten wurden, sind in der Tabelle 3 gegenübergestellt.

**Beispiel 2**

Der vorliegenden Erfindung entsprechend werden Hydrargillitpartikel ("Hy-C", "Hy-D" und "Hy-E", vgl. Tabelle 1 und Fig. 1) mit einer einheitlichen polyederartigen äußeren Form bzw. einem Formfaktor von < 5, aber unterschiedlichen mittleren Korndurchmesserbereichen (wobei 50 % des Kornanteils eine maximale Abweichung bezüglich der mittleren Teilchengröße von 1 $\mu$m in Probe "Hy-C", von 0,5 $\mu$m in Probe "Hy-D" und von 0,6 $\mu$m in Probe "Hy-E" aufweisen), unter folgenden Bedingungen schockartig erhitzt: Bei Temperaturen von 480 °C mit einem Delta T von 40 K bei mittleren Verweilzeiten der Festkörperpartikel in der Reaktionszone von 0,5 s.

Die wichtigsten physikalisch-chemischen Eigenschaften der resultierenden hochreaktiven Festkörper sind in der Tabelle 2 ("Hy-C/KC", "Hy-D/KC" und "Hy-E/KC") sowie in Fig. 5 und 6 wiedergegeben.

Das nach der Rehydratation (entsprechend Beispiel 1) filtrierte und gewaschene böhmitreiche Zwischenprodukt wird innerhalb von 12 h bei 120 °C getrocknet und anschließend in einer Stiftmühle deagglomeriert. In Abhängigkeit von der Formgebungsvariante wird der feinfaserige Böhmit mit unterschiedlichen Mengen von einem Binde- bzw. Gleitmittel oder einem Peptisationsmittel versetzt.

Im Falle der Herstellung von kugelförmigen Formkörpern wird der feinfaserige Böhmit in Wasser unter Zusatz von Salpetersäure (Molverhältnis $HNO_3$ : $Al_2O_3$ von 0,07) für 1 h suspendiert und die Mischung anschließend in bekannter Weise entweder mittels einer Wirbelschichtgranulierungs- oder Tropfkugelanlage in die gewünschten Formlinge überführt. Diese werden ihrerseits 5 h bei 500 °C calciniert, wobei die die Tropfkugelanlage verlassenden gelartigen Formlinge zuvor für 12 h bei 120 °C getrocknet werden. Die resultierenden Festkörpereigenschaften der Formkörper die im wesentlichen gamma-$Al_2O_3$ enthalten, auf der Basis des ausgewählten, entsprechend weiterverarbeiteten Schockcalcinationsproduktes ("Hy-D/KC/RH/PE/FO") sind in Tabelle 3 zusammengefaßt.

Im Falle der Extrusion des auf der Basis von "Hy-D" erhaltenen schockcalcinierten, anschließend rehydratisierten (vgl. Beispiel 1), entsprechend getrockneten und deagglomerierten feinfaserigen Böhmits wird dieser in einem Kneter im Zeitraum von 30 min unter Zusatz von Wasser und Salpetersäure peptisiert. Die so erhaltene hochviskose Masse wird mittels eines Extruders zu Wirbelsträngen (Durchmesser: 1,2 bis 6,0 mm) verformt, getrocknet und calciniert.

Die resultierenden Festkörpereigenschaften der Wirbelstränge sind ebenfalls in Tabelle 3 aufgeführt.

**Beispiel 3**

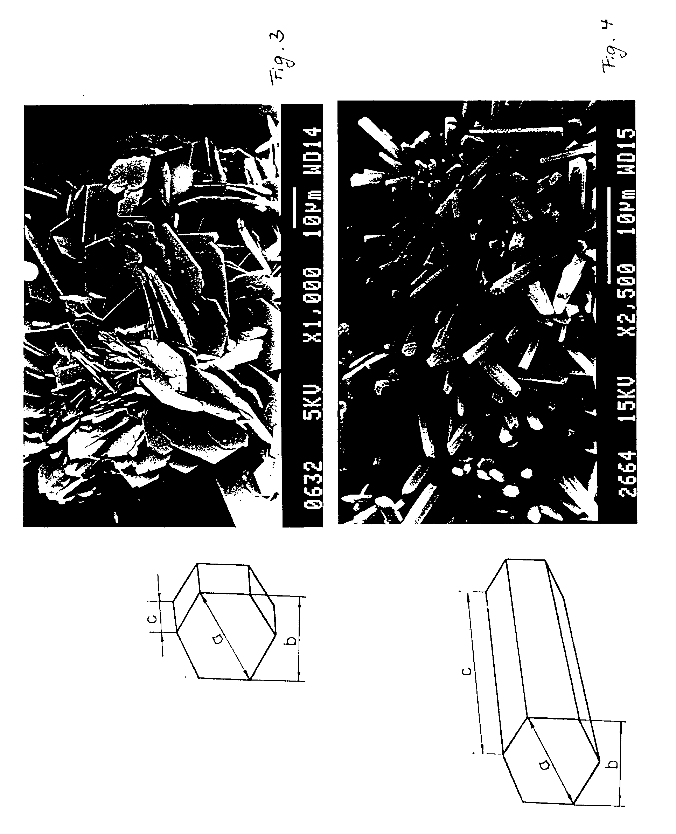

Erfindungsgemäß werden ungemahlene Hydrargillitpartikel mit einheitlich morphologischen Eigenschaften, die sich in der Gestalt von pseudohexagonalen Plättchen ausdrücken (gemäß Probe "Hy-A" in Tabelle 1 und Fig. 3), innerhalb einer mittleren Verweilzeit der Festkörperteilchen von 0,5 s einer kontinuierlichen thermischen Behandlung bei Temperaturen von 420 °C mit einem Delta T von 40 K unterworfen, so daß als Reaktionsprodukte teilkristalline chi-$Al_2O_3$-artige Festkörper mit besonderen Strukturmerkmalen (gemäß Tabelle 2, Probe "Hy-A/KC") resultieren, die zu einer hohen Rehydratationsreaktivität führen.

Eine unter gleichen Bedingungen wie in Beispiel 1 vorgenommene Rehydratation derartiger teilkristalliner Übergangsaluminiumoxide führt nach einer entsprechenden Weiterbearbeitung zu einem Festkörper mit 74 Ma.-% Böhmit (vgl. Tabelle 2) und einem $Na_2O$-Gehalt von 0,018 Ma.-% (bezogen auf $Al_2O_3$).

Die entsprechenden Formkörper, die im wesentlichen gamma-$Al_2O_3$ enthalten, werden analog Beispiel 2 hergestellt.

5

**Beispiel 4**

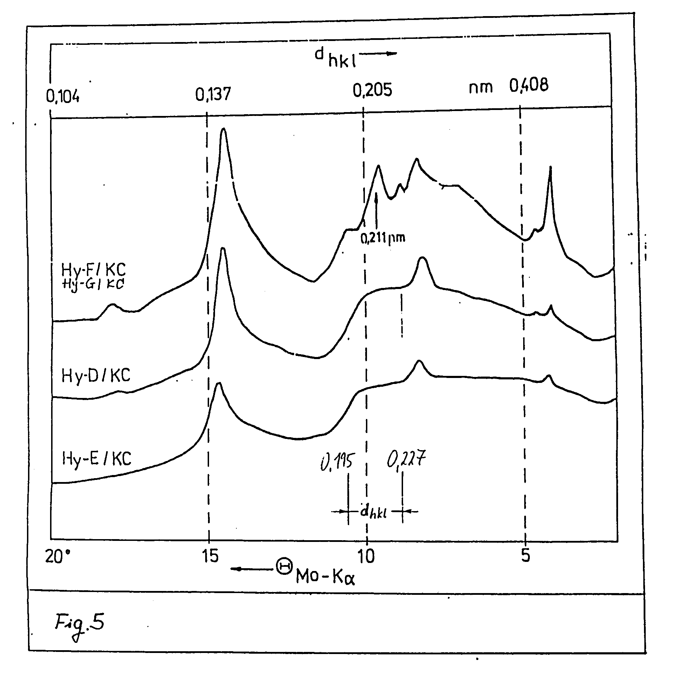

Gemäß der vorliegenden Erfindung wird ein hydrargillitisches Ausgangsmaterial ("Hy-B", vgl. Tabelle 1 und Fig. 4) mit einer einheitlichen äußeren Gestalt in Form von hexagonalen Nadeln/Prismen einer schockartigen Calcination im kontinuierlichen Regime bei Temperaturen von 450 °C (Delta T = 40 K) innerhalb von 0,5 s unterworfen.

Das auf diesem Wege erhaltene Zersetzungsprodukt zeichnet sich durch die in der Tabelle 2 ("Hy-B/KC") ausgewiesenen Festkörpereigenschaften aus.

Durch eine anschließende Rehydratation unter den in Beispiel 1 aufgeführten Bedingungen entsteht ein böhmitreicher Festkörper feinfaseriger Morphologie (81 Ma.-% Böhmit) mit einem $Na_2O$-Restgehalt von 0,016 Ma.-% (bezogen auf $Al_2O_3$).

Die entsprechenden Formkörper, die im wesentlichen aus gamma-$Al_2O_3$ bestehen, werden analog Beispiel 2 hergestellt.

Tabelle 1: Physikalisch-chemische Eigenschaften des Ausgangshydrargillits

| Kenngröße \ Hydrargillit-probe | A | B | C | D | E | F | G (nicht erfindungsgemäß) |
|---|---|---|---|---|---|---|---|
| **Chemische Zusammensetzung** | | siehe Beispiel "Hy-A" | | | | | siehe Beispiel "Hy-F" |
| Glührückstand (1100 °C) in Ma.-% | 65 | | | | | 65,1 | |
| x$Na_2O$ in Ma.-% | $\leq$ 0,20 | | | | | $\leq$ 0,45 | |
| x$Fe_2O_3$ in Ma.-% | 0,035 | | | | | 0,08-0,10 | |
| x$SiO_2$ in Ma.-% | 0,20 | | | | | 0,35 | |
| Röntgenographische Phasenzusammensetzung | | sehr gut kristalliner Hydrargillit | | | | | |
| **Morphologische Eigenschaften** | pseudohexagonale Plättchen (s. Fig. 3) | pseudohexagonale Prismen/Nadeln (s. Fig. 4) | Polyeder (s. Fig. 1) | | | Agglomerate (kugel-, plättchenförmig und prismatisch) (s. Fig. 2) | |
| **Spezifische Oberfläche** in m²/g | 5-8 | | 3-5 | 5-8 | 10-12 | < 1 | 1,5 |
| **Korngrößenfraktion (50 %)** in µm | 1,5-2,0 | | 1,5-2,5 | 1,5-2,0 | 1,2-1,8 | 20-60 | 2,5-18,5 |

EP 0 518 106 B1

Tabelle 2: Festkörpereigenschaften teilkristalliner Aluminiumoxide der Schockcalcination von Hydrargillit und seiner Folgeprodukte

| Calcinations- u. Rehydratationsprodukte / Kenngröße | A | B | C | D | E | F | G |
|---|---|---|---|---|---|---|---|
| Glührückstand (1100 °C) in Ma.-% | 92,5 | 93,0 | 94,0 | 93,0 | 91,6 | 92,0 | 93,0 |
| Röntgenographische Phasenzusammensetzung | teilkrist. chi-$Al_2O_3$ mit röntgenamorphen Anteilen mit fehlender Interferenz bei $d_{hkl}$ = 0,211 nm (vgl. Fig. 5, "Hy-D/KC" u. "Hy-E/KC") | | | | | teilkrist. chi-/gamma-$Al_2O_3$ mit geringen Hydrargillit-Anteilen (vgl. Fig. 5, "Hy-F/KC" u. "Hy-G/KC") | |
| Spezifische Oberfläche in m²/g | 64 | 52 | 230 | 285 | 306 | 275 | 254 |
| Festkörperreaktivität a) Lösbarkeit (L) in NaOH in Ma.-% | 95 | 100 | 96 | 100 | 100 | 59 | 72 |
| b) Rehydratationsreaktivität (Vermögen im neutralen Medium Aluminiumhydroxide/Böhmit zu bilden Böhmitgehalte in Ma.-% | 74 | 81 | 76 | 81 | 85 | 22 | 28 |

Tabelle 3: Festkörpereigenschaften der Al₂O₃-Formkörper

| Al₂O₃-Formkörper / Kenngröße | Vergleichsbeispiel (nicht erfindungsgemäß) "Hy-F/KC/RH/PE/FO..." | | | Erfindungsgemäße Beispiele "Hy-D/KC/RH/DE/FO.." | | |
|---|---|---|---|---|---|---|
| | Kugeln (1,5-6 mm) K | WG | Extrudate (1,2-6 mm Stränge) | Kugeln (1,5-6 mm) K | WG | Extrudate (1,2-6 mm Stränge) |
| **Röntgenographische Phasenzusammensetzung** | chi-/gamma-Al₂O₃ | | | im wesentlichen gamma-Al₂O₃ | | |
| $d_{sch}$ in kg/l | 0,78 | 0,50 | 0,69 | 0,62 | 0,54 | 0,58 |
| $V_{p\,ges.}$ in cm³/g | 0,65 | 0,58 | 0,48 | 0,63 | 0,70 | 0,56 |
| $S_{BET}$ in m²/g | 172 | 196 | 185 | 211 | 220 | 228 |
| Abrieb[1] in Ma.-% | | 20 | | | 3 | |
| Abriebfestigkeit in Ma.-% | | 80 | | | 97 | |

1) mittels "air-Lift" Methode

Erläuterungen:

| | | |
|---|---|---|
| Hy | = | Hydrargillit |
| F, D | = | jeweilige Hy-Ausgangsprobe (s. Tabelle 1) |
| KC | = | Schockcalcination |
| RH | = | Rehydratation |
| PE | = | Peptisation |
| FO | = | Formgebung |
| K | = | kugelf. gamma-Al₂O₃ (durch Vertropfung) |
| WG | = | kugelf. gamma-Al₂O₃ (mittels Wirbelgranulierung) |
| $S_{BET}$ | = | spezifische Oberflächengröße |
| $V_{p\,ges.}$ | = | Gesamtporenvolumen |
| $d_{sch}$ | = | Schüttdichte |

## Patentansprüche

1. Teilkristallines Übergangsaluminiumoxid, dadurch gekennzeichnet, daß der teilkristalline Festkörper neben 4- und 6-fach koordiniertem Aluminium auch 5-fach koordiniertes Aluminium gegenüber Sauer-

EP 0 518 106 B1

stoffenthält, wobei der Anteil an 5-fach koordiniertem Aluminium mindestens 50 % vom Gehalt an 4-fach koordiniertem Aluminium beträgt.

2. Teilkristallines Übergangsaluminiumoxid nach Anspruch 1, dadurch gekennzeichnet, daß das Röntgendiffraktogramm (aufgenommen mittels Mo-K$_\alpha$-Strahlung im Glanzwinkelbereich zwischen 3 und 20 Grad) des teilkristallinen Festkörpers keine Beugungsreflexe im Bereich der Netzebenenabstände von 0,195 <d$_{hkl}$ <0,227 nm aufweist.

3. Teilkristallines Übergangsaluminiumoxid nach einem der vorhergehenden Ansprüche, dadurch gekennzeichnet, daß der in einer 5 N NaOH-Lösung bei einer Temperatur von 60 °C in einem Zeitraum von 30 min aufgelöste Anteil des teilkristallinen Übergangsaluminiumoxids, als Maß für die chemische Festkörperreaktivität, mindestens 90 Ma.-% beträgt.

4. Teilkristallines Übergangsaluminiumoxid nach einem der vorhergehenden Ansprüche, dadurch gekennzeichnet, daß dieses in Gegenwart von Wasser bei 50 °C bis 95 °C und einem pH-Wert von 5,5 bis 10,5 im Zeitraum von 80 min eine Rehydratation zu feinfaserigem Böhmit erfährt, dessen Anteil ein Maß für die Rehydratationsreaktivität darstellt und mindestens 70 Ma.-% beträgt.

5. Teilkristallines Übergangsaluminiumoxid nach einem der vorhergehenden Ansprüche, dadurch gekennzeichnet, daß es durch Schockcalcination von Hydrargillitpartikeln mit einheitlicher morphologischer Struktur in einem Temperaturbereich von 350 bis 750 °C und bei einer mittleren Verweilzeit der Partikel in der Reaktionszone von 0,01 bis 10 s erhalten wurde.

6. Teilkristallines Übergangsaluminiumoxid nach einem der vorhergehenden Ansprüche, dadurch gekennzeichnet, daß es durch Schockcalcination von Hydrargillitpartikeln in Form von pseudohexagonalen Plättchen mit Formfaktoren > 5, einem Durchmesser von 0,1 bis 50 $\mu$m und einer Dicke von 0,1 bis 5 $\mu$m bei Temperaturen von 350 bis 550 °C und mittleren Verweilzeiten der Plättchen in der Reaktionszone von 0,05 bis 1,0 s erhalten wurde.

7. Teilkristallines Übergangsaluminiumoxid nach einem der Ansprüche 1 bis 5, dadurch gekennzeichnet, daß es durch Schockcalcination von Hydrargillitpartikeln in Form von pseudohexagonalen Nadeln mit Formfaktoren > 5, einer Länge von 0,1 bis 50 $\mu$m und einem Durchmesser von 0,1 bis 5 $\mu$m bei Temperaturen von 370 bis 600 °C und mittleren Verweilzeiten der Nadeln in der Reaktionszone von 0,1 bis 1,5 s erhalten wurde.

8. Teilkristallines Übergangsaluminiumoxid nach einem der Ansprüche 1 bis 5, dadurch gekennzeichnet, daß es durch Schockcalcination von feinstkristallinen Hydrargillitpartikeln mit einheitlicher polyederartiger äußerer Form und einem Formfaktor < 5 sowie einem Partikeldurchmesser als D$^{50}$-Wert zwischen 0,5 und 5 $\mu$m bei Temperaturen von 400 bis 630 °C und mittleren Verweilzeiten der Partikel in der Reaktionszone von 0,5 bis 5 s erhalten wurde.

9. Verfahren zur Herstellung von hochreaktiven Formkörpern, die im wesentlichen aus $\gamma$-Al$_2$O$_3$ bestehen, wobei zunächst Aluminiumtrihydroxidpartikel zu einem teilkristallinen Übergangsaluminiumoxid schockkalziniert werden und das teilkristalline Übergangsaluminiumoxid anschließend durch Rehydratation, Formgebung und Kalzination im wesentlichen in $\gamma$-Al$_2$O$_3$-Formkörper überführt wird,
dadurch gekennzeichnet,
daß das Verfahren zumindest die folgenden Verfahrensschritte umfaßt
a) Schockkalzinieren von feinkristallinen Hydrargillitpartikeln mit einheitlicher morphologischer Struktur in Form von
a1) pseudohexagonalen Plättchen mit Formfaktoren > 5 und einem Durchmesser von 0,1 bis 50 $\mu$m bei einer Dicke von 0,1 bis 5 $\mu$m verwendet werden oder
a2) pseudohexagonalen Nadeln mit Formfaktoren > 5 und einer Länge von 0,1 bis 50 $\mu$m bei einem Durchmesser von 0,1 bis 5 $\mu$m eingesetzt werden oder
a3) feinkristalline, polyederartige Hydrargillitparti kel mit einem Formfaktor < 5 und einem Partikel durchmesser als D$^{50}$-Wert zwischen 0,5 und 5 $\mu$m als Rehydratationsprodukt verwendet werden,
in einem Temperaturbereich von 350 bis 750 °C bei mittleren Verweilzeiten der Partikel in der Reaktionszone von 0,01 bis 10 s, wobei ein teilkristallines Übergangsaluminiumoxid nach einem der vorhergehenden Ansprüche mit hoher chemischer Festkörperreaktivität erzeugt wird,

10

b) Rehydratisieren des teilkristallinen Übergangsaluminiumoxid zu einem Aluminiumhydroxid, das im wesentlichen aus feinfaserigem Böhmit besteht,

c) Filtrieren des Rehydratationsproduktes und Auswaschen der im Filterkuchen vorhandenen Alkalimetallionen mit Wasser,

d) Vermischen des Rehydratationsproduktes mit einem Peptisationsmittel, wie z.B. einer anorganischen und/oder organischen Säure, oder mit einem Binde- bzw. Gleitmittel,

e) Formen der Mischung zu Formkörpern, z.B. durch Pelletieren, Extrudieren, Granulieren oder Vertropfen,

f) thermische Nachbehandlung der Formkörper, wobei diese im wesentlichen in aktives $\gamma$-$Al_2O_3$ überführt werden.

10. Verfahren nach Anspruch 9,
dadurch gekennzeichnet,
daß die pseudohexagonalen Hydrargillitplättchen bei Temperaturen von 350 bis 550 °C und mittleren Verweilzeiten der Plättchen in der Reaktionszone von 0,05 bis 1,0 s schockcalciniert werden.

11. Verfahren nach Anspruch 9 oder 10,
dadurch gekennzeichnet,
daß die pseudohexagonalen Hydrargillitnadeln bei Temperaturen von 370 bis 600 °C und mittleren Verweilzeiten der Nadeln in der Reaktionszone von 0,1 bis 1,5 s schockcalciniert werden.

12. Verfahren nach einem der Ansprüche 9 bis 11,
dadurch gekennzeichnet,
daß die feinstkristallinen, polyederartigen Hydrargillitpartikel bei Temperaturen von 400 bis 630 °C und mittleren Verweilzeiten der Partikel in der Reaktionszone von 0,5 bis 5 s schockcalciniert werden.

13. Verfahren nach einem der Ansprüche 9 bis 12,
dadurch gekennzeichnet,
daß die Rehydratation des teilkristallinen Übergangsaluminiumoxides in einer wäßrigen Suspension mit einem Massenverhältnis Festkörper/Flüssigkeit zwischen 1:3 und 1:10 diskontinuierlich oder kontinuierlich bei Temperaturen von 50 bis 95 °C und einem pH-Wert zwischen 5,5 und 10,5 in einem Zeitraum von 45 bis 120 min durchgeführt wird, wobei ein Aluminiumhydroxid entsteht, das mindestens 70 Ma.-% feinfaserigen Böhmit enthält.

14. Verfahren nach einem der Ansprüche 9 bis 13,
dadurch gekennzeichnet,
daß in Verfahrensstufe c) der $Na_2$-O-Gehalt bis auf einen Wert unterhalb von 0,03 Ma.-% abgesenkt wird.

15. Verfahren nach einem der Ansprüche 9 bis 14,
dadurch gekennzeichnet,
daß das nach der Verfahrensstufe c) erhaltene gewaschene Rehydratationsprodukt in Form eines böhmitreichen Aluminiumhydroxides vor dem Vermischen mit dem Peptisationsmittel oder dem Binde- bzw. Gleitmittel zunächst getrocknet und deagglomeriert wird.

16. Verfahren nach einem der Ansprüche 9 bis 15,
dadurch gekennzeichnet,
daß das Rehydratationsprodukt in Form eines böhmitreichen Aluminiumhydroxides in Verfahrensstufe d) unter Zugabe einer Säure bei einem Molverhältnis Säure / $Al_2O_3$ zwischen 0,005 und 0,05 in einem Zeitraum von 15 bis 90 min bei 25 °C innig gemischt und peptisiert wird, wobei die anschließende Formgebung durch Extrudieren erfolgt.

17. Verfahren nach einem der Ansprüche 9 bis 16,
dadurch gekennzeichnet,
daß das Rehydratationsprodukt in Form eines böhmitreichen Aluminiumhydroxides in Verfahrensstufe d) unter Zugabe einer Säure bei einem Molverhältnis Säure / $Al_2O_3$ zwischen 0,02 und 0,2 in einem Zeitraum von 30 bis 120 min bei 25 °C innig gemischt und peptisiert wird, wobei die anschließende Formgebung durch Granulieren oder Vertropfen erfolgt.

**18.** Verfahren nach einem der Ansprüche 9 bis 17,
dadurch gekennzeichnet,
daß das Rehydratationsprodukt mit einem Gleit- bzw. Bindemittel, wie z.B. Graphit, vermischt und anschließend durch Pelletieren geformt wird.

**19.** Verfahren nach einem der Ansprüche 9 bis 18,
dadurch gekennzeichnet,
daß die Formkörper bei der thermischen Nachbehandlung calciniert werden in einem Zeitraum von 4 bis 8 h bei Temperaturen im Bereich zwischen 450 und 650 °C, wobei Formkörper erzeugt werden, die im wesentlichen aus aktivem $\gamma$-Al$_2$O$_3$ bestehen.

**20.** Verfahren nach einem der Ansprüche 9 bis 19,
dadurch gekennzeichnet,
daß die Formkörper vor dem Calcinieren zunächst getrocknet werden, bei einer Temperatur zwischen 100 und 150 °C in einem Zeitraum von 12 bis 24 h.

**21.** Verwendung von teilkristallinen Übergangsaluminiumoxiden mit hoher chemischer Festkörperreaktivität nach einem der Ansprüche 1 bis 8 zur Herstellung von Formkörpern, die im wesentlichen aus $\gamma$-Al$_2$O$_3$ bestehen, wobei die Formkörper als Adsorbentien, Gasreinigungsmassen, Katalysatorkomponenten oder Träger von Katalysatoren einsetzbar sind.

**22.** Verwendung von teilkristallinen Übergangsalumimuimoxiden mit hoher chemischer Festkörperreaktivität nach einem der Ansprüche 1 bis 8 zur Herstellung von keramischen Materialien, Poliermitteln und Schleifkörnungen.

**Claims**

**1.** A partially crystalline transition aluminium oxide,
characterised in
that the partially crystalline solid member, apart from tetracoordinate and hexacoordinate aluminium, also contains pentacoordinate aluminium relative to oxygen, with the amount of pentacoordinate aluminum constituting at least 50% of the content of tetracoordinate aluminium.

**2.** A partially crystalline transition aluminium oxide according to claim 1,
characterised in
that the X-ray diffractogram (taken by means of Mo-K$_c$ radiation in the glancing angle range between 3 and 20 degrees) of the partially crystalline solid member does not comprise any diffraction reflexes in the lattice distance range of 0.195 < d$_{hkl}$ < 0.227 mm.

**3.** A partially crystalline transition aluminium oxide according to any one of the preceding claims,
characterised in
that the amount of partially crystralline transition aluminium oxide dissolved in a 5 N NaOH solution at a temperature of 60 °C within a period of 30 min, said amount being a measure for the chemical solid member reactivity, constitutes at least 90 % by mass.

**4.** A partially crystalline transition aluminium oxide according to any one of the preceding claims,
characterised in
that, in the presence of water at 50 °C to 95 °C and with a pH-value of 5.5 to 20.5 within a period of 80 min, it is rehydrated to form a fine-fibre boehmite whose percentage constitutes a measure for the rehydration activity and amounts to at least 70 % by mass.

**5.** A partially crystalline transition aluminium oxide according to any one of the preceding claims,
characterised in
that it was obtained by rapid calcination of hydrargillite particles with a uniform morphological structure in a temperature range of 350 to 750 °C, with the particles being held in the reaction zone for a mean holding time of 0.01 to 10 s.

EP 0 518 106 B1

6. A partially crystalline transition aluminium oxide according to any one of the preceding claims, characterised in
that it was obtained by rapid calcination of hydrargillite particles in the form of pseudohexagonal platelets with form factors > 5, a diameter of 0.1 to 50 $\mu$m and a thickness of 0.1 to 5 $\mu$m at temperatures of 350 to 550 °C, with the platelets being held in the reaction zone for a mean holding time of 0.05 to 1.0 s.

7. A partially crystalline transition aluminium oxide according to any one of claims 1 to 5, characterised in
that it was obtained by rapid calcination of hydrargillite particles in the form of pseudohexagonal needles with form factors > 5, a length of 0.1 to 50 $\mu$m and a diameter of 0.1 to 5 $\mu$m at temperatures of 370 to 600 °C, with the needles being held in the reaction zone for mean holding times of 0.1 to 1.5 s.

8. A partially crystalline transition aluminium oxide according to any one of claims 1 to 5, characterised in
that it was obtained by rapid calcination of finest-crystalline hydrargillite particles with a uniform polyhedron-like external form and a form factor < 5 and a particle diameter as the $D^{50}$-value between 0.5 and 5 $\mu$m at temperatures of 400 to 630 °C, with the particles being held in the reaction zone for mean holding times of 0.5 to 5 s.

9. A process of producing highly reactive formed members substantially consisting of $\gamma$-Al$_2$O$_3$, with, initially, aluminium trihydroxide particles being rapidly calcinated to form a partially crystalline transition aluminum oxide and with the partially crystalline transition aluminium oxide subsequently being converted substantially into $\gamma$-Al$_2$O$_3$ formed members by rehydration, forming and calcination, characterised in
that the process comprises at least the following process stages:
    a) rapid calcination of fine-crystalline hydrargillite particles with a uniform morphological structure in the form of
        a1) pseudohexagonal platelets with form factors > 5 and a diameter of 0.1 to 50 $\mu$m and with a thickness of 0.1 to 5 $\mu$m, or
        a2) pseudohexagonal needles with form factors > 5 and a length of 0.1 to 50 $\mu$m and with a diameter of 0.1 to 5 $\mu$m, or
        a3) fine-crystalline, polyhedron-like hydrargillite particles with a form factor < 5 and a particle diameter as the $D^{50}$-value between 0.5 and 5 $\mu$m as the rehydration product
    in a temperature range of 350 to 750 °C, with the particles being held in the reaction zone for mean holding times of 0.01 to 10 s, with a partially crystalline transition aluminium oxide according to any one of the preceding claims being produced with a high chemical solid member reactivity;
    b) rehydratisation of the partially crystalline transition aluminium oxide to form an aluminium hydroxide substantially consisting of fine-fibre boehmite;
    c) filtering the rehydration product and washing the alkali metal ions contained in the filter cake with water;
    d) mixing the rehydration product with a peptizer, such as an inorganic and/or organic acid, or with a bonding or sliding agent;
    e) converting the mixture to formed members, e.g. by pelletizing, extruding, granulating or drop formation;
    f) subsequent thermal treatment of the formed members, converting same substantially into active $\gamma$-Al$_2$O$_3$.

10. A process according to claim 9, characterised in
that the pseudohexagonal hydrargillite platelets are subjected to rapid calcination at temperatures of 350 to 550 °C, with the platelets being held in the reaction zone for mean holding times of 0.05 to 1.0 s.

11. A process according to claim 9 or 10, characterised in
that the pseudohexagonal hydrargillite needles are subjected to rapid calcination at temperates of 370

13

EP 0 518 106 B1

to 600 °C, with the needles being held in the reaction zone for mean holding times of 0.1 to 1.5 s.

**12.** A process according to any one of claims 9 to 11,
characterised in
that the fine-crystalline, polyhedron-like hydrargillite particles are subjected to rapid calcination at temperatures of 400 to 630 °C, with the particles being held in the reaction zone for mean holding times of 0.5 to 5 s.

**13.** A process according to any one of claims 9 to 12,
characterised in
that rehydration of the partially crystalline transition aluminium oxide takes place discontinuously or continuously in an aqueous suspension with a solid member/liquid mass ratio ranging between 1:3 and 1:10 at temperatures of 50 to 95 °C and with a pH value between 5.5 and 10.5 within a period of 45 to 120 min, thereby producing an aluminium hydroxide containing at least 70% by mass of fine-fibre boehmite.

**14.** A process according to any one of claims 9 to 13,
characterised in
that at process stage c), the $Na_2O$ content is reduced to a value lower than 0.03 % by mass.

**15.** A process according to any one of claims 9 to 14,
characterised in
that the washed rehydration product in the form of a boehmite-rich aluminium hydroxide obtained after process stage c) is first dried and deagglomerated prior to being mixed with the peptizer or the bonding or gliding agent.

**16.** A process according to any one of claims 9 to 15,
characterised in
that at process stage d), an acid with a mole ratio of acid/$Al_2O_3$ ranging between 0.005 and 0.05 is added to the rehydration product in the form of a boehmite-rich aluminium hydroxide, with both being thoroughly mixed and peptized for 15 to 90 min at 25 °C, with the subsequent forming operation being effected by extrusion.

**17.** A process according to any one of claims 9 to 16,
characterised in
that at process stage d), an acid with a mole ratio of axid/$Al_2O_3$ ranging between 0.02 and 0.2 is added to the rehydration product in the form of a boehmite-rich aluminium hydroxide, with both being thoroughly mixed and peptized for 30 to 120 min at 25 °C, with the subsequent forming operation being effected by granulation or drop formation.

**18.** A process according to any one of claims 9 to 17,
characterised in
that the rehydration product is mixed with a sliding or bonding agent such as graphite and subsequently formed by pelletization.

**19.** A process according to any one of claims 9 to 18,
characterised in
that during the subsequent thermal treatment, the formed members are calcined for a period of 4 to 8 h at temperatures ranging between 450 and 650 °C, thereby producing formed members substantially consisting of active $\gamma$-$Al_2O_3$.

**20.** A process according to any one of claims 9 to 19,
characterised in
that prior to being calcinated, the formed members are first dried for a period of 12 to 24 h at temperatures ranging between 100 and 150 °C.

**21.** Using partially crystalline transition aluminium oxides with a high chemical solid member reactivity according to any one of claims 1 to 8 for producing formed members substantially consisting of $\gamma$-

14

Al$_2$O$_3$, such formed members being suitable for being used as adsorbents, gas cleaning masses, catalyst components or catalyst carriers.

22. Using partially crystalline transition aluminium oxides with a high chemical solid member reactivity according to any one of claims 1 to 8 for producing ceramic materials, polishing agents and grinding grains.

**Revendications**

1. Oxyde d'aluminium à transition semi-cristalline caractérisé en ce que le solise semi-cristallin contient également des atomes d'aluminium 5 fois liés à un atome d'oxygène en plus des atomes d'aluminium 4 et 6 fois liés à un atome d'oxygène, dans lequel la proportion d'atomes d'aluminium 5 fois liés correspond à au moins 50 % de la quantité d'atomes d'aluminium 4 fois liés.

2. Oxyde d'aluminium à transistion semi-cristalline selon la revendication 1, caractérisé en ce que le diagramme de diffraction des rayons X (photographiés au moyen du rayonnement Mo-K$_\alpha$ dans le domaine de l'angle de Bragg compris entre 3 et 20°) du solide semi-cristallin ne présente aucun rayonnement diffracté dans le domaine des écartements de plans réticulaires satisfaisants à l'inéquation 0,195<d$_{hkl}$<0,227 nm.

3. Oxyde d'aluminium à transition semi-cristalline selon l'une des revendications précédentes, caractérisé en ce que la part d'oxyde d'aluminium à transition semi-cristalline qui est dissoute dans une solution de NaOH 5 N, à la température de 60°C, sur une durée de trente minutes est, calculée en tant que mesure de la réactivité chimique du solide, au moins de 90 % en poids.

4. oxyde d'aluminium à transition semi-cristalline selon l'une des revendications précédentes, caractérisé en ce que celui-ci subit une réhydratation qui permet d'obtenir une Boehmite constituée de fines plaquettes, en présence d'eau, à une température comprise dans un intervalle allant de 50°C à 95°C et à une valeur de pH comprise dans un intervalle allant de 5,5 à 10,5, sur l'espace de temps de 80 minutes, dont la teneur équivaut à une mesure de la réactivité de la réhydratation et vaut au moins 70 % en poids.

5. Oxyde d'aluminium à transition semi-cristalline selon l'une des revendications précédentes, caractérisé en ce qu'il a été obtenu par une calcination ultra-rapide des particules d'hydrargillite dotées d'une structure morphologique homogène, le domaine de températures allant de 350 à 750°C et le temps de séjour moyen par particule dans la zone de réaction étant compris dans un intervalle allant de 0,01 à 10 secondes.

6. Oxyde d'aluminium à transition semi-cristalline selon l'une des revendications précédentes, caractérisé en ce qu'il a été obtenu par une calcination ultra-rapide des particules d'hydrargillite qui se présentent sous la forme de plaquettes pseudo-hexagonales avec des facteurs de forme de particules > 5, un diamètre compris dans un intervalle allant de 0,1 à 50 $\mu$m et une épaisseur comprise dans un intervalle allant de 0,1 à 5 $\mu$m pour des températures allant de 350 à 550°C et des temps de séjour moyens des plaquettes dans la zone de réaction compris dans un intervalle allant de 0,05 à 1,0 s.

7. Oxyde d'aluminium à transition semi-cristalline selon l'une des revendications 1 à 5, caractérisé en ce qu'il a été obtenu par une calcination ultra-rapide des particules d'hydrargillite qui se présentent sous la forme d'aiguilles pseudo-hexagonales avec des facteurs de forme de particules > 5, une longueur comprise dans un intervalle allant de 0,1 à 50 $\mu$m et un diamètre compris dans un intervalle allant de 0,1 à 5 $\mu$m, à des températures allant de 370 à 600°C et avec des temps de séjour moyens des particules dans la zone de la réaction compris dans un intervalle allant de 0,1 à 1,5 s.

8. Oxyde d'aluminium à transition semi-cristalline selon l'une des revendications 1 à 5, caractérisé en ce qu'il a été obtenu par une calcination ultra-rapide des particules d'hydrargillite finement cristallisées dotées d'une structure extérieure homogène de type polyèdrique et avec un facteur de forme de particules < 5 ainsi qu'avec un diamètre de particules compris, en tant que valeur D$^{50}$, dans un intervalle allant de 0,5 à 5 $\mu$m, à des températures allant de 400 à 630°C et avec des temps de séjour moyens de particules dans la zone de réaction compris dans un intervalle allant de 0,5 à 5 s.

**9.** Procédé pour la fabrication de produits moulés hautement réactifs qui sont pour l'essentiel constitués d'Al$_2$O$_3$-γ dans lequel on calcine tout d'abord de façon brutale des particules d'hydroxyde d'aluminium pour obtenir un oxyde d'aluminium à transition semi-cristalline et dans lequel on transforme ensuite l'oxyde d'aluminium à transition semi-cristalline en produits moulés composés essentiellement d'Al$_2$O$_3$-γ en lui faisant subir une réhydratation, puis une mise en forme et enfin une calcination, caractérisé en ce que, le procédé comprend au minimum les étapes de mise en oeuvre suivantes :

a) calcination ultra-rapide des particules d'hydrargillite finement cristallisées dotées d'une structure morphologique homogène ayant la forme

a1) de plaquettes pseudo-hexagonales avec des facteurs de forme de particules > 5 et avec un diamètre compris dans un intervalle allant de 0,1 à 50 μm pour une épaisseur comprise dans un intervalle allant de 0,1 à 5 μm, ou

a2) d'aiguilles pseudo-hexagonales avec des facteurs de forme de particules > 5 et une longueur comprise dans un intervalle allant de 0,1 à 50 μm pour un diamètre compris dans un intervalle allant de 0,1 à 5 μm, ou

a3) de particules d'hydrargillite de type polyédrique, finement cristallisées, avec un facteur de forme de particules < 5 et un diamètre de particules compris, en tant que valeur D$^{50}$, dans un intervalle allant de 0,5 à 5 μm, que l'on utilise comme produit de réhydratation,

dans un domaine de températures allant de 350 à 750°C pour un temps moyen de séjour des particules dans la zone de réaction compris dans un intervalle allant de 0,01 à 10 s, ou l'on élabore un oxyde d'aluminium à transition semi-cristalline selon l'une des revendications précédentes, avec une réactivité chimique élevée du solide,

b) la réhydratation de l'oxyde d'aluminium à transition semi-cristalline dans le but d'obtenir un hydroxyde d'aluminium qui se compose, pour l'essentiel, de Boehmite à fibres de faible diamètre,

c) la filtration du produit de réhydratation et le lavage à grande eau des ions des métaux alcalins présents dans le gâteau de filtration,

d) le mélange du produit de réhydratation avec un agent peptisant comme, par exemple, un acide organique et/ou inorganique, ou avec un agent liant et, le cas échéant, avec un agent lubrifiant,

e) la mise en forme du mélange en vue d'obtenir des produits moulées, par exemple par agglomération sous forme de boulettes, par extrusion, par granulation ou par pulvérisation sous forme de gouttelettes,

f) le post-traitement thermique des produits moulés, dans lequel ces derniers sont transformés, pour l'essentiel, en Al$_2$O$_3$-γ active.

**10.** Procédé d'après la revendication 9, caractérisé en ce que, les plaquettes d'hydrargillite pseudo-hexagonales subissent une calcination ultra-rapide à des températures comprises dans un intervalle allant de 350 à 550°C et pour des temps moyens de séjour des plaquettes à l'intérieur de la zone de réaction compris dans un intervalle allant de 0,05 à 1,0 s.

**11.** Procédé d'après la revendication 9 ou 10, caractérisé en ce que, les aiguilles d'hydrargillite pseudo-hexagonales subissent une calcination ultra-rapide à des températures comprises dans un intervalle allant de 370 à 600°C et pour des temps moyens de séjour des aiguilles dans la zone de réaction compris dans un intervalle allant de 0,1 à 1,5 s.

**12.** Procédé d'après l'une des revendications 9 à 11, caractérisé en ce que, les particules d'hydrargillite de forme polyédrique, finement cristallisées, subissent une calcination ultra-rapide à des températures comprises dans un intervalle allant de 400 à 630°C et pour des temps moyens de séjour des particules dans la zone de réaction compris dans un intervalle allant de 0,5 a 5 s.

**13.** Procédé d'après l'une des revendications 9 à 12, caractérisé en ce que, on effectue la réhydratation de l'oxyde d'aluminium à transition semi-cristalline dans une suspension aqueuse avec un rapport massique solide/liquide compris entre 1:3 et 1:10, de façon discontinue ou continue, à des températures comprises dans un intervalle allant de 50 à 95°C et pour une valeur de

EP 0 518 106 B1

pH comprise dans un intervalle allant de 5,5 à 10,5, sur une période de temps comprise dans un intervalle allant de 45 à 120 min, après quoi on récupère un hydroxyde d'aluminium qui contient au moins 70 % en poids de Boehmite constituée par des fibres de petit diamètre.

**14.** Procédé d'après l'une des revendications 9 à 13,
caractérisé en ce que,
dans l'étape de mise en oeuvre c), la teneur en $Na_2$-O chute à une valeur située en dessous de 0,03 % en poids.

**15.** Procédé d'après l'une des revendications 9 à 14,
caractérisé en ce que,
le produit de réhydratation qui a été lavé et que l'on a obtenu en suivant l'étape de mise en oeuvre c) sous la forme d'un oxyde d'aluminium contenant une grande proportion de Boehmite, est soumis d'abord à une dessiccation et à une désagglomération avant qu'il ne soit mélangé a l'agent de peptisation ou à l'agent liant et, le cas échéant, à l'agent lubrifiant.

**16.** Procédé d'après l'une des revendications 9 à 15,
caractérisé en ce que,
on mélange intimement et on peptise le produit de réhydratation qui se présente sous la forme d'un hydroxyde d'aluminium à forte teneur en Boehmite, dans l'étape de mise en oeuvre d), en lui ajoutant un acide en respectant un rapport molaire acide/$Al_2O_3$ compris dans un intervalle allant de 0,005 à 0,05, sur une période de temps allant de 15 à 90 min et à une température de 25°C, à l'occasion de quoi on procède immédiatement après par extrusion à la mise en forme.

**17.** Procédé d'après l'une des revendications 9 à 16,
caractérisé en ce que,
dans l'étape de mise en oeuvre d), on mélange intimement et l'on peptise le produit de réhydratation qui se présente sous la forme d'un hydroxyde d'aluminium à forte teneur en Boehmite, en lui ajoutant un acide suivant un rapport molaire acide/$Al_2O_3$ compris dans un intervalle allant de 0,02 à 0,2 sur une période de temps allant de 30 a 120 min à la température de 25°C, à l'occasion de quoi on procède immédiatement après à la mise en forme par granulation ou sous forme de gouttelettes.

**18.** Procédé d'après l'une des revendications 9 à 17,
caractérisé en ce que,
on mélange le produit de réhydratation avec un agent lubrifiant ou un agent liant tel que, par exemple, le graphite et qu'on lui donne ensuite la forme de boulette.

**19.** Procédé d'après l'une des revendications 9 à 18,
caractérisé en ce que,
on calcine les produits moulés par post-traitement thermique sur une période de temps allant de 4 à 8 heures, à des températures comprises dans un intervalle allant de 450 à 650°C, à l'occasion de quoi on récupère des produits moulés qui sont constitués, pour l'essentiel, d'$Al_2O_3$-$\gamma$ active.

**20.** Procédé d'après l'une des revendications 9 à 19,
caractérisé en ce que,
on fait tout d'abord subir au produit moulé une dessiccation avant de procéder à leur calcination, cela à une température comprise dans un intervalle allant de 100 à 150°C, sur une durée allant de 12 à 24 heures.

**21.** Emploi d'oxydes d'aluminium à transition semi-cristalline possédant, a l'état solide, une réactivité chimique élevée selon l'une des revendications 1 à 8, pour la fabrication de corps moulés qui sont constitués, pour l'essentiel, d'$Al_2O_3$-$\gamma$, dans laquelle les produits moulés sont mis en oeuvre en tant qu'agents adsorbants, en tant que matières d'épuration des gaz, en tant que composants de catalyseurs ou en tant que supports de catalyseurs.

**22.** Emploi d'oxydes d'aluminium à transition semi-cristalline possédant, à l'état solide, une réactivité chimique élevée, selon l'une des revendications 1 à 8 pour la fabrication de matériaux céramiques, de matériaux de polissage et de particules abrasives.

17

Fig. 1

Fig. 2

Fig. 3

Fig. 4

Fig.5

Fig. 6